# EUROPEAN PATENT APPLICATION

(11) **EP 1 628 185 A2**
(43) Date of publication of application: **22.02.2006**
(21) Application number: 05012541.8
(22) Date of filing: 10.06.2005
(51) Int. Cl.: G06F 1/00

(54) **Mobile communication terminal and data access control method**

(30) Priority: 11.06.2004 JP 2004174611
(71) Applicant: NTT DoCoMo, Inc., Tokyo 100-6150 (JP)
(72) Inventor: Tsuda, Masayuki c/o NTT DoCoMo, Inc., 100-6150 Tokyo (JP); Hattori, Yasunori c/o NTT DoCoMo, Inc., 100-6150 Tokyo (JP)
(74) Representative: Grosse, Wolfgang

(57) **Abstract**

This mobile communication terminal comprises a data storage portion for storing application data utilized when executing an application program, an application management portion for controlling the execution of the application program, and an authorization information storage portion accessible by the application management portion. In response to a request from the application program for saving application data in the data storage portion, the application management portion generates access authorization information related to the application data and stores it in the authorization information storage portion and, in the case of a request for access to the application data from the application program, refers to the access authorization information related to that application data, to approve the access request from the application program.

## Description

### BACKGROUND OF THE INVENTION

### Field of the Invention

The present invention relates to a mobile communication terminal and data access control method.

### Related Background Art

For some time, downloading applications to mobile communication terminals, such as mobile telephones, and executing the applications thereon has been done. Among application programs of this kind were ones, such as programs for displaying a desired image on the display screen during times of "call standby," whereby graphic data, music data and the like were read out and the program operated utilizing these data. The access control method described in Japanese Patent Laid-Open Publication No. 2003-209814 is an example of technology for controlling the data access of programs of this type.

With this access control method, a television receiver receives access authorization information along with broadcast data, and when an application executing within the television receiver accesses that broadcast data, it determines whether or not to permit that access based on the access authorization information. In this way, data access not intended by the data owner is prevented.

However, in the conventional technology described above, because the access authorization information is embedded in the broadcast data that the application program uses, there is a possibility that access authorization information could be altered by the malicious application program when the broadcast data is loaded to memory, if the data format has been gotten. Further, after saving the data utilized while executing the application program (data which was acquired or generated), access control over other application programs is not being performed for the saved data. In other words, it is difficult to perform access control of data in respect to other applications after that data, such as the graphic data which an application program for displaying images during call standby obtains from various servers or the graphic data generated through photography done by an application program for graphic editing utilizing a built-in camera, has once been saved in memory or the like.

### SUMMARY OF THE INVENTION

An object of the present invention is to address this problem and, by enabling flexible setting of the access authorization when secondary data is utilized, to provide a mobile communication terminal and data access control method for achieving safer data access control in regard to application programs.

The mobile communication terminal of the present invention comprises data storage means for storing application data utilized by an application program when the application program is executed, application management means for controlling the execution of the application program, and authorization information storage means accessible by the application management means, and in response to a request from the application program for saving application data to the data storage means, the application management means generates access authorization information related to the application data and stores it in the authorization information storage means and, in the case of a access request from the application program for access to the application data stored in the data storage means, refers to the access authorization information related to the application data from the authorization information storage means, and approves the access request from the application program.

Alternatively, the data access control method of the present invention controls access to application data used when executing an application program that is being executed on a mobile communication terminal. The method comprises: an authorization information storing step in which, in response to a request from the application program for saving application data, application management means which controls the execution of the application program generates access authorization information related to the application data and afterwards stores it in a data region accessible by the application management means; a request receiving step in which the application management means receives a access request from the application program for access to the application data; and a request approving step in which, in response to the access request, the application management means refers to the access authorization information related to the application data from the data region, and approves the access request from the application program.

With this kind of mobile communication terminal and data access method, whenever an application program, by means of application management means, saves application data, such as graphic data and audio data, access authorization information in regard to that application data is generated and stored. Then, when there is an access request (a readout request) from an application program, including other application programs, for application data, that access request is approved by the application management means based on access authorization information. As a result, access control is enabled in regard to application data (application data acquired or generated) utilized by an application program and also, since there is no external sending of access authorization information, access control with a higher level of safety is achieved. Further, "access control," as used here means deciding whether to permit or not permit data readout in response to a request from an application program for readout of application data, and thus controlling data readout processing. Also, because access authorization information is stored in data regions for use by the application management means, data altering by another application program or the like is prevented at the same time.

Also, it is preferable that the access authorization information be obtained by associating application data specifying information which specifies the application data, with owner application specifying information which specifies the owner application which is the application program that saved the application data, and it is preferable that when there is an access request from the application program for access to the application data, the application management means determines, based on the access authorization information, whether or not the application program is the owner application corresponding to the application data, and approves the access request based on the result of that determination.

In this case, because access to the application data is permitted based on a determination by the application management means as to whether or not it is the owner application which has saved that application data, diversion of graphic data, music data and the like which extend over a plurality of application programs is readily prevented.

### BRIEF DESCRIPTION OF THE DRAWINGS

Fig. 1 is a simplified configuration diagram that shows one preferred embodiment of the mobile communication terminal according to the present invention;
Fig. 2 is a diagram that shows the configuration of the data stored in the authorization information storage portion of Fig. 1;
Fig. 3 is a flow chart that shows the operation of the mobile communication terminal at the time of storing application data;
Fig. 4 is a flow chart that shows the operation of the mobile communication terminal at the time of reading out application data; and
Fig. 5 is a flow chart that shows the operation of the mobile communication terminal at the time of acquiring an application data list.

### DESCRIPTION OF THE PREFERRED EMBODIMENTS

Below, the preferred embodiments of a mobile communication terminal according to the present invention will be described in detail along with the figures. Also, in the explanation of the figures, the same elements are given the same designators and repetitive descriptions are omitted.

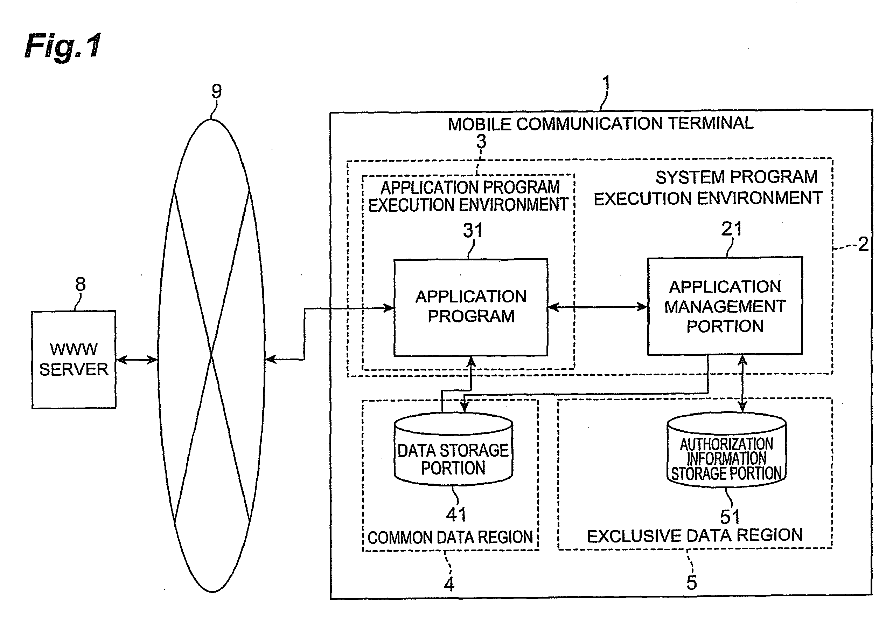

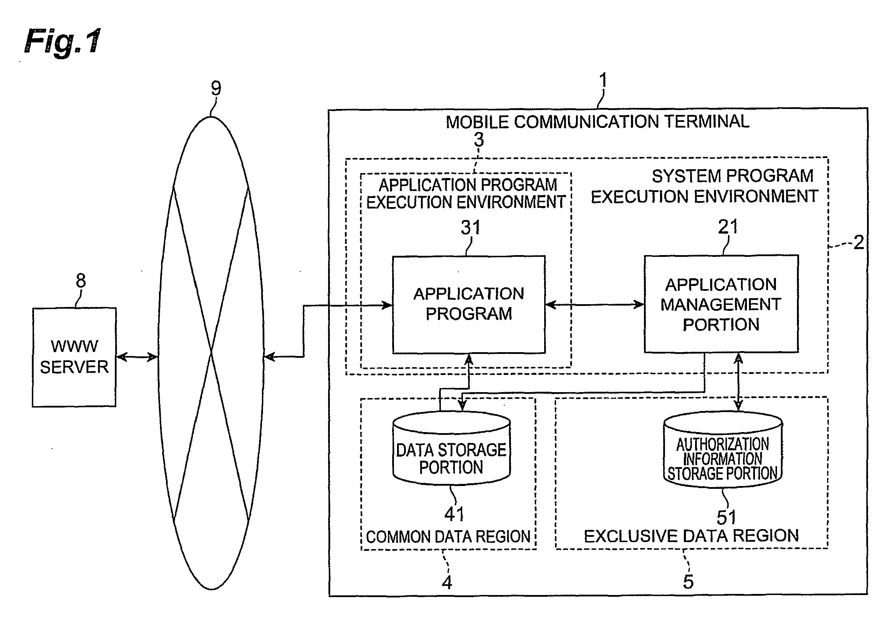

Fig. 1 is a simplified configuration diagram that shows one preferred embodiment of the mobile communication tenninal according to the present invention. In this drawing, a mobile communication terminal 1 is a communications tenninal having an environment enabling operation of an application program which implements functions such as a standby graphic display function or a game function. As examples of communication terminals of this type, devices that enable information communication via a network, such as mobile telephones, PHS (Personal Handyphone System) and PDA (Personal Digital Assistance) may be cited.

Further, as shown in Fig. 1, the mobile communication terminal 1 is configured to include as functional constituent elements a system program executing environment 2, an application program executing environment 3, a common data region 4, and a exclusive data region 5.

The system program executing enviromnent 2 is one configured on hardware such as a CPU (Central Processing Unit) and a RAM (Random Access Memory) and is an operating environment wherein reside system programs such as the OS (Operating System) which performs file management, memory management and data input/output management; provides a user interface; and does other such functions. Further, in the system program executing environment 2, the basic programs for implementing the telephone function, which is the fundamental function of the mobile communication terminal 1, the E-mail sending/receiving function, the Internet connection function, and the like are also executing.

In addition, the application program executing enviromnent 3 is configured on the system program executing environment 2 and is the operating environment for enabling the execution of the above-mentioned application programs in JAVA (registered trademark) language. More specifically, in the application program executing environment 3, in order to execute the above-mentioned application programs in JAVA (registered trademark) language, the above-mentioned language is converted to a code that can be interpreted in the system program executing environment 2 and is passed to the system program executing environment 2. Hereinafter, when the term "application program" is used, it will indicate programs, other than the system program or fundamental program, which are downloaded from an outside source, such as a WWW server, and executed.

The common data region 4 is provided in memory, such as RAM (Random Access Memory), ROM (Read Only Memory), or magnetic disk. It is the data region for storing system data utilized by system programs such as the OS; fundamental data, such as telephone book data, utilized by fundamental programs; and the application data, such as the graphic data and music data utilized by application programs. This common data region 4 is configured to enable data reference/writing, not only from the system programs and fundamental programs executing on the system program executing environment 2 but also from the application programs executing on the application program executing environment 3.

In the same way, the exclusive data region 5 is provided in memory, such as RAM (Random Access Memory), ROM (Read Only Memory), or magnetic disk. It is the data region for storing primarily system data which is utilized by system programs such as the OS. Further, this exclusive data region 5 is configured to enable data reference/writing only from the system programs executing on the system program executing environment 2.

Further, on the above-mentioned application program executing environment 3, an application program 31 is initiated. The application program 31 is one acquired from a WWW (World Wide Web) server 8 via a network 9, which is configured of a mobile communication network and the Internet, and which implements functions on the mobile communication terminal 1 such as a standby graphic display function and/or a game function.

When it is executing, this application program 31 refers to application data such as graphic data and music data. As an example of this application data, the data for displaying graphic data at times of call standby, music data played at times of game screen display, and the like may be cited. Among this application data will be data acquired from the WWW server 8 or another server when the application program 31 is downloaded or executing and data generated within the mobile communication terminal 1 when the application program 31 is executing. As an example of the former, graphic data related to images displayed at times of call standby may be cited, while as an example of the latter, graphic data captured by a camera built into the mobile communication terminal 1 may be cited.

The application program 31, after acquiring application data, stores the application data in a data storage portion (data storage means) 41 within the common data region 4, through the control of an application management portion 21. Also, application program 31 performs "as needed readout" (details will be explained below) of application data from the data storage portion 41 through the control of the application management portion 21.

Additionally, on the system program executing environment 2, the application management portion (application management means) 21 is initiated as a system program. The application management potion 21 has the function of controlling the execution of the application program 31. In other words, the application management portion 21 has an initiation control function for controlling initiation of the application program 31, an access control function for controlling access by the application program 31 to the data storage portion 41, and a communication control function for controlling communication with the VVWW server 8 during execution of the application program 31.

With one of these, the initiation control function, the application management portion 21, based on an initiation command for application program 31 from input means not shown in the figures, initiates application program 31 by referring to an ADF file (Application Descriptor File) acquired from the WWW server 8. Here, the ADF file is a file which is acquired from the WWW server 8 immediately prior to downloading the application program 31 and is stored within the mobile communication terminal 1. The information necessary for initiation, such as the file name under which the application program 31 is stored, is described therein. Similarly, in the communication control function, the application management portion 21, by collectively managing the addressees of the application program 31, prevents incorrect communication by the application program 31.

Below, the access control function of the application management portion 21 is described in detail.

### (Functioning when application data is saved)

In response to an application data save request to the data storage portion 41 from the application program 31, the application management portion 21 generates access authorization information and also stores it in an authorization information storage portion (authorization information storage means) 51, within the exclusive data region 5.

First, when saving application data by means of the application program 31, a save function within the application management portion 21 is called by the application program 31. Here, when the save function is called (save request), a "save flag" showing whether access from other application programs is permitted or not permitted is passed to the application management portion 21 from the application program 31.

In response, the application management portion 21 saves the corresponding application data in the data storage portion 41 and also assigns an application data ID (application data specifying information) which identifies that application data. Afterward, the application program 31 which had called the save function is specified by means of the URL (Uniform Resource Locator) which is the ADF file acquisition source corresponding to that application program 31. Then, the application management portion 21, in the way described below, generates a combination of owner application specifying information, an application data address which shows the storage location address of the application data, and application data ID, as access authorization information, and also stores it the combination in the authorization information storage portion 51. Here, "owner application" means the application program which first acquired or generated the application data. In other words, in the case that the save flag is "not permitted," the above-mentioned acquisition source URL will be saved in authorization information storage portion 51, as owner application specifying information, also making an association to the application data address and the application data ID. On the other hand, in the case that the save flag is "permitted," owner application specifying information is set to "Any" and is saved in the authorization information storage portion 51, also making an association to the application data address and the application data ID.

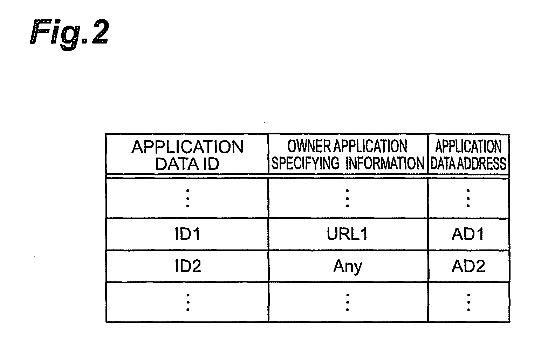

Fig. 2 shows the configuration of the data stored in the authorization information storage portion 51 when the above arrangement is in place. The same figure shows the example of the case where the application program 31 specified by the ADF file acquisition source URL "URL1", when it saves the application data specified by application data ID "ID1", has called a save function, attaching a "not permitted" save flag. In this case, the owner application specifying information "URL1" and the application data address "AD1" are stored, with an association made to the application data ID "BD1". Also shown together in the same figure is the example of the case where the application program 31 specified by the ADF file acquisition source URL "URL1", when it saves the application data specified by application data ID "ID2", has called a save function, attaching a "permitted" save flag. In this case, the owner application specifying information "Any" and the application data address "AD2" are stored, with an association made to the application data ID "ID2".

### (Functioning when application data is read out)

Further, in the case that there is a request from the application program 31 to read out the application data stored in data storage portion 41, the application management portion 21 also approves the access request, referring to the access authorization information from the authorization information storage portion 51 which relates to that application data.

First, when readout of application data is done by the application program 31, the readout function (access request) within the application management portion 21 is called from the application program 31. Here, when calling the readout function, the readout data ID that specifies the application data that is to be read out is passed from the application program 31 to the application management portion 21.

In response, the application management portion 21 specifies, according to the ADF file acquisition source URL, the application program 31 which called the readout function. Then, the application management portion 21, referring to the authorization information storage portion 51, extracts the access authorization information for which the application data ID matches the readout data ID that was passed from the application program 31. Afterward, if the owner application specifying information in the extracted access authorization information matches the acquisition source URL related to the application program 31, or in the case of "Any", the application management portion 21 approves the access request by returning to the application program 31 the application data address from the access authorization information for that program. On the other hand, for cases other than those indicated above, the application management portion 21 returns an error message to the application program 31.

According to the example of Fig. 2, in the case the application program 31 has called a readout function, attaching the readout data ID "ID1", if it is determined that the acquisition source URL "URL1" corresponding to the application program 31 matches the owner application specifying information, the application data address "AD1" is returned.

Returning to Fig. 1, as explained above, after an access request has been approved, based on access authorization information, in response to an application program 31 readout function call, the application program 31 reads out application data from the data storage portion 41.

### (Functioning when an application data list is acquired)

Additionally, in the case that there is a request from the application program 31 to acquire a list of application data showing application data stored in the data storage portion 41, the application management portion 21 also creates a list of application data, referring to access authorization information from the authorization information storage portion 51 related to the application data. This application data list is the listed data of the application data IDs that the application program is able to read out and is data provided to allow the user to select application data through the application program.

When acquiring the application data list through the application program 31, first, the list acquisition function (access request) within the application management portion 21 is called from the application program 31.

In response, the application management portion 21 specifies the application program 31 that called the list acquisition function in terms of the ADF file acquisition source URL. Then, the application management portion 21, referring to the authorization information storage portion 51 extracts the access authorization information if the owner application specifying information matches the acquisition source URL that corresponds to application program 31 or if it is "Any". Afterward, the application management portion 21 returns to the application program 31, as an application data list, a list of the application data IDs and application data addresses found in all the extracted access authorization information. Functioning in this way, the application management portion 21, in respect to the application program 31, approves requests for access to the application data specified by the access data IDs included in the application data list.

According to the example of Fig. 2, in the case that the application program 31 calls the list acquisition function, access authorization information for which the owner application specifying information is "URL1", or is "Any", is extracted. Then, an application data list including application data ID "ID1" and application data address "AD1", and also application data ID "ID2" and application data address "AD2", will be returned to the application program 31.

Returning to Fig. 1, as explained above, after the application data list is returned to the application program 31, the application program 31, by outputting an application data list, enables the user to select application data from the application data list. Based on the user's selection, application program 31 reads out the application data from the data storage portion 41. Here also, based on the user's selection, the selected application data may be set in the operating conditions as "as needed readout" application data when the application program 31 is executing.

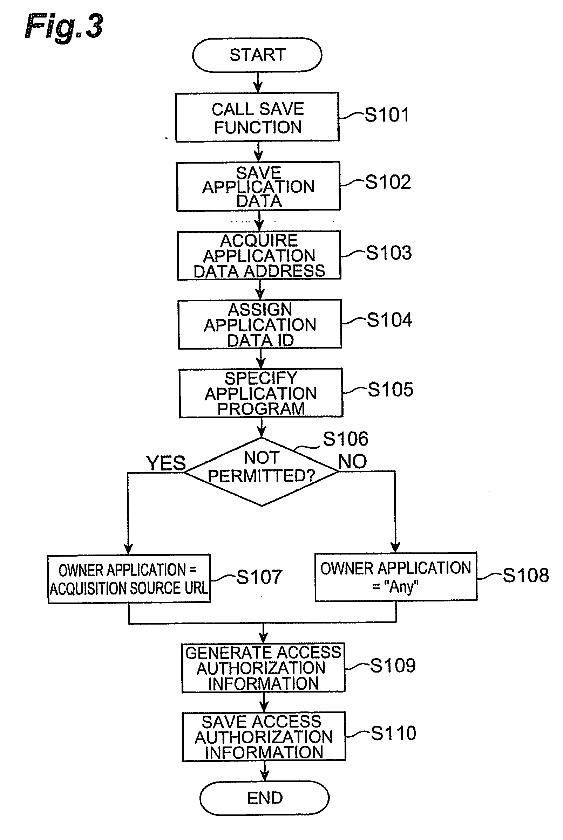

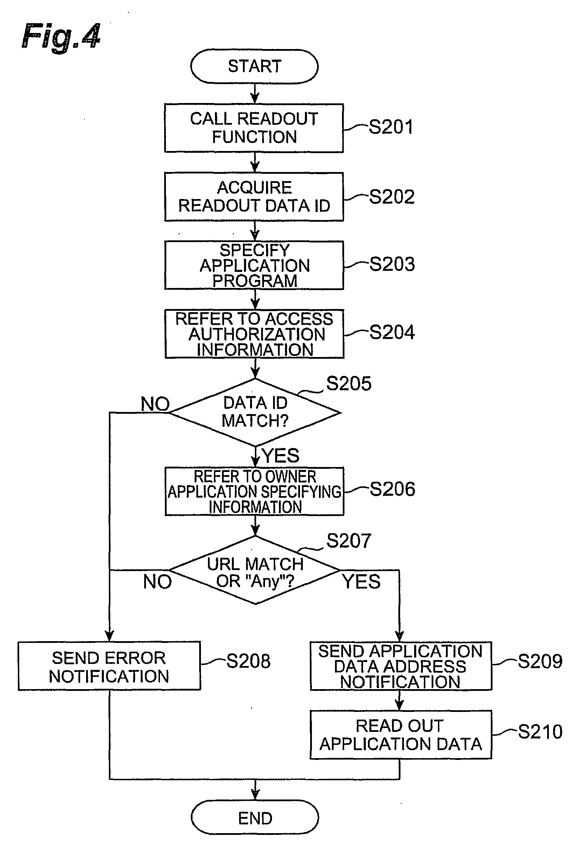

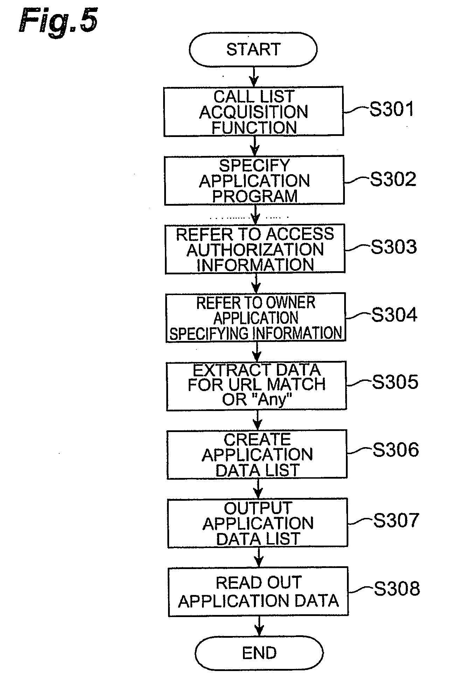

Next, operation of the mobile communication terminal 1 will be explained along with a detailed description of the data access control method in the mobile communication terminal 1. Fig. 3 is a flow chart that shows the operation of the mobile communication terminal 1 at the time of storing application data; Fig. 4 is a flow chart that shows the operation of the mobile communication terminal 1 at the time of reading out application data; and Fig. 5 is a flow chart that shows the operation of the mobile communication terminal 1 at the time of acquiring an application data list.

First, referring to Fig. 3, the operation of the mobile communication terminal 1 at the time of storing application data will be explained.

To start with, when the application program 31 starts to save the application data, the save function within the application management portion 21 is called by the application program 31 (Step S101).

In response to this save function call (save request), the application management portion 21 saves the application data in the data storage portion 41 (Step S102). When saving, the application management portion 21 acquires the application data addresses in the data storage portion 41 (Step S103). Also, the application management portion 21 assigns application data IDs to identify the saved application data (Step S104).

Then, the application management portion 21 specifies, in terms of an ADF file acquisition source URL, the application program 31 which called the save function (Step S105). Afterwards, the application management portion 21 determines whether the save flag passed from the application program 31 is "Not permitted" or not (Step S106).

If the result of the above-mentioned determination is that the save flag is "Not permitted," (Step S106: YES), the application management portion 21 sets the owner application specifying information as the acquisition source URL corresponding to the application program 31 (Step S107). On the other hand, if the save flag is "Permitted" (Step S106: NO), it sets the owner application specifying information as "Any" (Step S108).

Then, the application management portion 21 generates, as the access authorization information, a combination of the owner application specifying information which has been set, the application data address, and the application data ID (Step S109). Finally, application management portion 21 stores in the authorization information storage portion 51 the access authorization information thus generated (Step S110).

Next, referring to Fig. 4, the operation of the mobile communication terminal 1 at the time of reading out application data will be explained.

To start with, when the application program 31 starts to call the application data, the readout function within the application management portion 21 is called by the application program 31 (Step S201). At that time, the readout data ID specifying the application data which is to be read out is passed from the application program 31 to the application management portion 21 (Step S202).

Upon receiving the readout function call, the application management portion 21 specifies the application program 31 in terms of an ADF file acquisition source URL (Step S203). Then, the application management portion 21 refers to the access authorization information stored in the authorization information storage portion 51 (Step S204). Also, the application management portion 21 determines whether the application data ID in the referenced access authorization information matches the readout data ID passed from the application program 31 or not (Step S205).

If the result of the above-mentioned determination is that the application data IDs of all the access authorization information do not match the readout data ID (Step S205: NO), the application management portion 21 sends the application program 31 an error code notice (Step S208). This error code is to notify the application program 31 that readout of the application data is not permitted.

On the other hand, if the application data ID of the access authorization information matches the readout data ID (Step S205: YES), the application management portion 21 refers to the owner application specifying information included in that access authorization information (Step S206). Then a determination is made as to whether the owner application specifying information thus referred to matches the acquisition source URL corresponding to the application program 31 or is "Any" (Step S207).

In the case that the result of the determination is that the owner application specifying information matches the acquisition source URL corresponding to the application program 31 or is "Any" (Step S207: YES), the application management portion 21 acquires the application data address included in the access authorization information and returns it to the application program 31 (Step S209).

In response, the application data specified by the readout ID is read out by application program 31 from the address within data storage portion 41 indicated by the application data address (Step S210).

On the other hand, in the case that the owner application specifying information does not match the acquisition source URL corresponding to the application program 31, and is also not "Any," (Step S207: NO), the application management portion 21 sends the application program 31 an error code notice (Step S208).

Below, referring to Fig. 5, the operation of the mobile communication terminal 1 at the time of acquiring an application data list will be explained.

To start with, when the application program 31 starts to acquire an application data list, the list acquisition function within the application management portion 21 is called by the application program 31 (Step S301).

Upon receiving the list acquisition function call, the application management portion 21 specifies the application program 31 in terms of an ADF file acquisition source URL (Step S302). Then, the application management portion 21 refers to the access authorization information stored in the authorization information storage portion 51 (Step S303). The application management portion 21 also refers to the owner application specifying information included the above-mentioned access authorization information (Step S304). Afterward, from the access authorization information, any access authorization information for which the owner application specifying information matches the acquisition source URL corresponding to the application program 31, or which is "Any", is extracted (Step S305).

The application management portion 21 creates a combination of the application data IDs and application data addresses which are included in the access authorization information extracted in this way and returns it to the application program 31 (Step S306).

In response, at the application program 31, the application data list is outputted to a display or the like (Step S307). Based on this output, through the selection of application data by the user, application data is read from the data storage portion 41 by the application program 31 (Step S308).

By means of the mobile communication terminal 1 described above, when the application program 31 saves application data such as graphic data or music data, access authorization information related to that application data is generated and stored in the authorization information storage portion 51 by the application management portion 21. Then, when there is a request from an application program, including other application programs, that request is approved by the application management portion 21 based on the access authorization information. As a result, access control in regard to the application data generated by the mobile communications terminal 1 itself is enabled, and also, because there is no transmission of access authorization information to the outside, access control with a higher level of safety is achieved. Also, because the access authorization information is stored in a data region 5 for the exclusive use of the application management means, data altering by other application programs and the like is prevented at the same time.

Also, because access to application data is allowed based on a determination by the application management portion 21 as to whether the requestor is the owner application that saved that application data or not, the diversion of graphic data, music data and the like which are used across a plurality of application programs is readily prevented.

Note that the present invention is not limited to the embodiments described above. For example, the application program 31 is not limited to programs written in JAVA (registered trademark) language, it may also be written in C language or another language.

Also, here the exclusive data region 5 was configured so that referring to or writing data is possible only from the system program, but this may be configured so that referring to or writing data is possible from programs other than application programs.

Moreover, here the application program 31 performed application data readout from the data storage portion 41, but this may be performed by the application management portion 21.

Further, with the application management portion 21, the application program 31 was specified by the acquisition source URL corresponding to the application program 31, but it would also be acceptable to utilize for this a value found by performing a prescribed calculation on the acquisition source URL.

## Claims

1. A mobile communication terminal comprising:
data storage means for storing application data utilized by an application program when the application program is executed;
application management means for controlling the execution of the application program; and
authorization information storage means accessible by said application management means;
wherein, in response to a request from the application program for saving the application data to said data storage means, said application management means generates access authorization information related to said application data and stores the access authorization information in said authorization information storage means, and, in the case of a access request from the application program for access to the application data stored in said data storage means, refers to the access authorization information related to the application data from said authorization information storage means to approve said access request from said application program.

2. The mobile communication terminal according to claim 1 wherein said access authorization information is obtained by associating application data specifying information for specifying application data with owner application specifying information for specifying the owner application which is the application program that saved said application data, and
in the case of a access request from the application program for access to the application data, said application management means determines, based on said access authorization information, whether or not said application program is the owner application corresponding to said application data, and approves said access request based on the determination result.

3. A data access control method for controlling access to application data used when executing an application program being executed on a mobile communication terminal, comprising:
an authorization information storing step in which, in response to a request from the application program for saving the application data, application management means which controls the execution of the application program generates access authorization information related to said application data and afterwards stores the access authorization information in a data region accessible by said application management means;
a request receiving step in which said application management means receives a access request from the application program for access to the application data; and
a request approving step in which, in response to said access request, said application management means refers to the access authorization information related to said application data from said data region, and approves said access request from said application program.
